# EUROPEAN PATENT APPLICATION

(11) **EP 0 946 031 A2**
(43) Date of publication of application: **29.09.1999**
(21) Application number: 99105086.5
(22) Date of filing: 24.03.1999
(51) Int. Cl.: H04M 1/274

(54) **Display controller for mobile radio communication terminal and method of controlling display in the same**

(30) Priority: 25.03.1998 JP 7742998
(71) Applicant: NEC CORPORATION, Tokyo (JP)
(72) Inventor: Kikuchi, Kazuaki, c/o NEC Saitama Ltd., Kodama-gun, Saitama (JP)
(74) Representative: VOSSIUS & PARTNER

(57) **Abstract**

There is provided a display controller including a memory (7) for storing therein a plurality of information sets, each including a first information for identifying a name of a call-receiver, a phone number of the subscriber, and a second information indicative of an attribute of the phone number, an input device (4) for making input of the first information of a desired call-receiver to be retrieved, a controller (2) for extracting an information set including the thus input first information, and a display (6) for displaying information thereon, characterized by that the controller (2) causes the display (6) to display the second information, along with the first information, stored in the memory (7) in an information set including the first information. In accordance with the display controller, one call-receiver's name and a plurality of phone numbers associated with the call-receiver are displayed, for instance. Hence, a caller readily recognizes a desired phone number, ensuring improved operability and convenience.

## Description

The invention relates to a display controller and a method of controlling display, and more particularly to a display controller for controlling display of registered information, and a method of doing the same.

Conventional mobile radio-communication devices such as a mobile telephone are provided with an abbreviated phone number dialing function and a telephone directory function. Normally, in these functions, one phone number is assigned to one subscriber's name.

When it is desired to make a call to a destination telephone subscriber through the abbreviated phone number dialing function, a display screen is scrolled to thereby search a subscriber's name in registered data, and then, a call is made. Thus, it is possible to make an automatic call to a registered phone number associated with the searched subscriber's name.

In such a mobile telephone as mentioned above, when evoked, registered phone numbers and subscribers' names are displayed in their registered order. Hence, if a plurality of phone numbers one person owns for a home telephone, an office telephone, a mobile telephone, and so on, for example, can be registered in the mobile telephone, each of the phone numbers should be registered along with his or her name. In this case, when evoked, the plurality of phone numbers and subscriber's name are displayed in succession in their registered order, which will be helpful to a mobile telephone user to some degree in selecting a desired one of the plurality of phone numbers registered in the mobile telephone.

However, it is assumed that one or more of phone numbers of one person is(are) registered, and then, one or more of phone numbers of other person(s) is(are) registered, and further, the remaining phone number or numbers of the one person is(are) registered, for example. In this case, a plurality of phone numbers of the one person is not displayed in succession when evoked for making a call, because the phone number(s) of the other person(s) is(are) registered between first and second registrations of phone numbers of the one person.

More specifically, assume that a name of Mr. A and his home phone number are first registered, then a name of Mr. B and his office phone number are registered, then a name of Mr. C and his mobile telephone number are registered, and a few days after, a name of Mr. A and his mobile telephone number are registered. In this assumption, when evoked for making a call, the registered phone numbers are displayed along with the respective owners' or subscribers' names in succession in their registered order. That is, the Mr. A's home phone number, Mr. B's office phone number, Mr. C's mobile phone number, and Mr. A's mobile phone number are displayed in this order along with the respective names. Thus, Mr. A's two phone numbers, namely, home and mobile phone numbers, are displayed separately from each other. As a result, it would not be so easy to distinguish those two phone numbers, and accordingly, it would take some time to select a desired phone number.

The maximum number of times of scrolling a display screen, required to evoke each of abbreviated phone numbers in their registered order is equal to the number of the registered abbreviated phone numbers.

Moreover, if a plurality of information sets each including a pair of a subscriber's name and his or her phone number is indicated on a display, a user could not recognize a desired phone number so quickly.

Japanese Unexamined Patent Publication No. 5-3507 has suggested a telephone in which if a part of registered phone number, name, and other information is input into the telephone, a destination telephone subscriber associated with the thus input information is displayed on a display screen.

Japanese Unexamined Patent Publication No. 5-204795 has suggested an e-mail system in which a symbol such as a photograph or a portrait of a user is displayed together with an address of an e-mail, a list of addressers, and so on.

Japanese Unexamined Patent Publication No. 7-131512 has suggested a communication terminal having an electronic telephone directory function When a destination telephone subscriber is to be retrieved, a capital letter of the destination is input into the communication terminal.

Japanese Unexamined Patent Publication No. 9-83630 has suggested a telephone in which portraits of telephone subscribers are displayed each in the form of an icon. If an icon associated with a destination telephone subscriber is appointed, a call to the destination telephone subscriber is made.

Japanese Unexamined Patent Publication No. 8-181763 has suggested a communication terminal including a real-time identifier for identifying a current time at which a call is made, and a memory for storing a plurality of phone numbers of various persons. If an instruction is given to the communication terminal to make a call to a certain person, one of phone numbers of the certain person is automatically selected in dependence on a current time at which the call is made, and then a call is made to the thus selected phone number.

Japanese Unexamined Patent Publication No. 9-275441 has suggested a cellular phone including a memory storing therein a plurality of sets of data, each having a name of a person, a phone number of the person, and a mark symbolizing a group to which the person belongs. When a destination phone number is to be retrieved, all the marks are displayed on a display screen. On selection of one of the marks, names belonging to the group associated with the selected mark are all displayed.

It is an object of the present invention to provide a display controller which makes it possible for a user to readily recognize a name and/or a phone number of a destination person.

It is also an object of the present invention to provide a method of display control, which can do the same.

In one aspect of the present invention, there is provided a display controller, comprising (a) a memory for storing therein a plurality of information sets, each including a first information for identifying a name of a call-receiver, a phone number of the subscriber, and a second information indicative of an attribute of the phone number, (b) an input device for making input of the first information of a desired call-receiver to be retrieved from the plurality of information sets stored in the memory, (c) a controller for extracting an information set including the thus input first information, from the memory, and (d) a display for displaying information thereon, characterized by that the controller causes the display to display the second information, along with the first information, stored in the memory in an information set including the first information.

In another aspect of the present invention, there is provided a mobile communication terminal including such a display controller as defined above.

In still another aspect of the present invention, there is provided a method of controlling an operation of a display, comprising the steps of (a) storing at least two information steps each including a first information for identifying a name of a call-receiver, a phone number of the call-receiver, and a second information indicative of an attribute of the phone number, (b) making input of a certain first information for retrieving an information set including the certain first information, (c) extracting the information set including the certain first information, and (d) displaying the second information associated with the certain first information, along with the certain first information.

The display controller in accordance with the present invention is adapted to receive an input of a telephone subscriber's name to be retrieved or ID information associated with the name, when a registered information including a pair of a name and a phone number is retrieved. If there is found a registered information coincident with the input name or ID information, a plurality of phone numbers is displayed for a common subscriber's name or ID information. Thus, the present invention enables a user to readily recognize a desired destination phone number, ensuring enhanced operability and convenience in the use of a mobile telephone, for instance.

### BRIEF DESCRIPTION OF THE DRAWINGS

Fig. 1 is a block diagram of a mobile telephone including a display controller in accordance with the preferred embodiment.
Fig. 2 is a flow chart of an operation to be carried out in the preferred embodiment to register a phone number and a subscriber's name.
Fig. 3 illustrates a preferred storage pattern in RAM illustrated in Fig. 1.
Fig. 4 is a flow chart of an operation to be carried out in the preferred embodiment to retrieve a phone number and a subscriber's name.
Fig. 5 illustrates an example of indication on the display illustrated in Fig. 1.
Fig. 6 illustrates another example of indication on the display in illustrated in Fig. 1.

### DESCRIPTION OF THE PREFERRED EMBODIMENTS

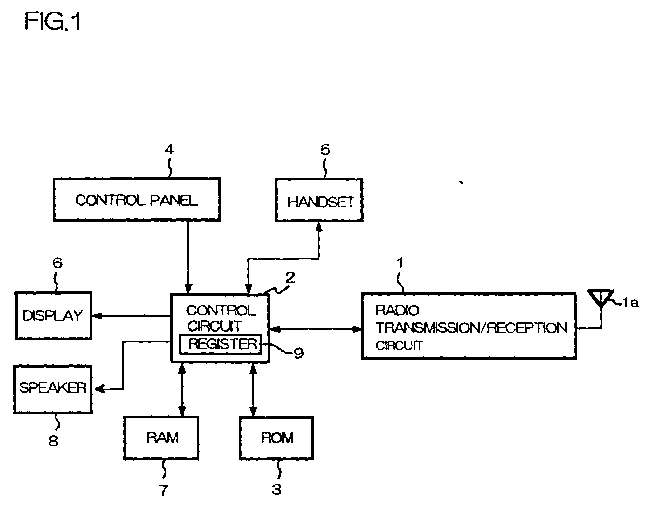

Fig. 1 is a block diagram of a mobile telephone to which a display controller in accordance with the preferred embodiment of the present invention is applied.

The illustrated mobile telephone is comprised of an antenna 1a, a radio transmission/reception circuit 1, a control circuit 2, ROM 3, a control panel 4, a handset 5, a display 6, RAM 7, and a speaker 8. The antenna 1, ROM 3, the control panel 4, the handset 5, the display 6, RAM 7, and the speaker 8 are all electrically connected to the control circuit 2, and are controlled in operation by the control circuit 2. The control circuit 2 includes a register 9 therein.

In the mobile telephone illustrated in Fig. 1, when a calling signal arrives at the radio transmission/reception circuit 1 via the antenna 1a from a base station (not illustrated), the control circuit 2 compares an identification (ID) number included in the calling signal with an ID number characteristic of the mobile telephone, stored in ROM 3. When they are coincident with each other, the control circuit 2 causes the speaker 8 to make a sound for alarming arrival of a calling. If a user of the mobile telephone actuates an off-hook button on the control panel 4 in response to the alarming sound, the control circuit 2 transmits a reception acknowledge signal from the radio transmission/reception circuit 1, and allows the user to have a talk with a caller through the handset 5.

On the other hand, when a destination phone number is dialed through the use of keys on the control panel 4, and then, the off-hook button is actuated in order to make a call, the control circuit 2 transmits a calling signal through the radio transmission/reception circuit 1. The dialed destination phone number is indicated on the display 6 for verification. When a telephone line is connected to a destination telephone, and then, an answer is made back to the mobile telephone, a user can start having a talk.

A plurality of abbreviated phone numbers are registered in RAM 7. In addition, call reception history may be stored in RAM 7, and a directory function may be provided in the mobile phone. When an abbreviated phone number is designated by operating keys on the control panel 4 at the time of making a call, destination subscribers' names and phone numbers previously stored in RAM 7 are displayed one after another. A call is made to a selected one of the phone numbers.

The control panel 4 is provided thereon at least ten keys, an off-hook button, and function keys for designating an abbreviated phone number and scrolling a display screen.

In the display controller in accordance with the present embodiment, when information previously registered in RAM 7, such as an abbreviated phone number, is to be displayed on the display 6, a plurality of phone numbers owned by a person is individually displayed along with a name of the person.

The mobile telephone may be designed to have further components in addition to those illustrated in Fig. 1. However, components having nothing to do with the present invention are not illustrated.

In the preferred embodiment, the present invention is applied to a mobile telephone as illustrated in Fig. 1, but the present invention can be applied also to various mobile communication systems such as a pager, an automobile telephone, a cordless telephone, a second-generation cordless telephone PHS (personal handyphone system), and so on. In addition, the present invention is applicable to stationary communication system, a mobile information terminal, personal computer, and so on, other than the mobile communication systems.

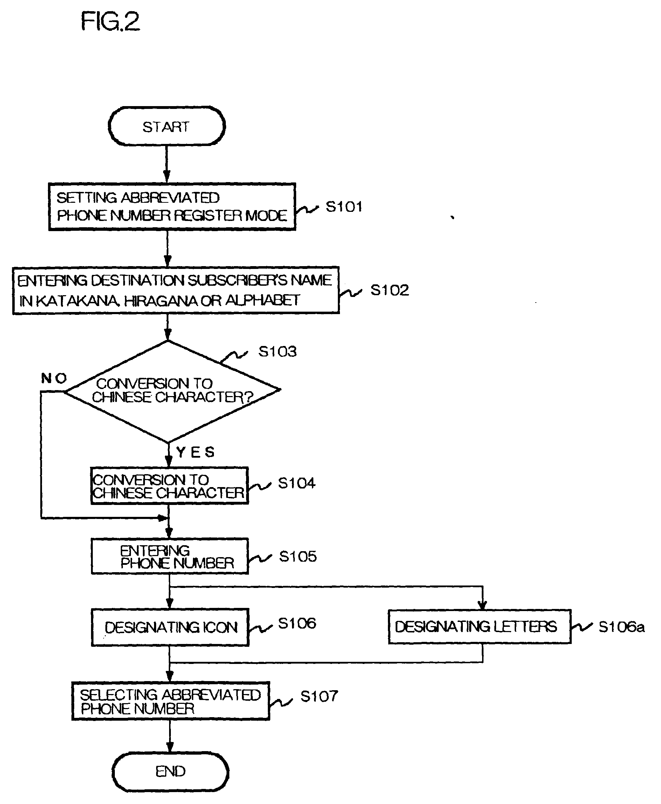

Fig. 2 is a flow chart of an operation to be carried out for registration of an abbreviated phone number in the preferred embodiment of the present invention.

As illustrated in Fig. 2, an abbreviated phone number register mode is set through the use of keys on the control panel 4 in step S101. Then, a call-receiver's name, preferably his or her full name, is entered in a *hiragana* (the cursive *kana* characters), a *katakana* (the square form of *kana)* or alphabet, in step S102. *Hiragana* and *katakana* are selected using predetermined keys on the control panel 4, and are entered using the ten keys.

When the entered *katakana* or *hiragana* are to be converted to *kanji* or Chinese characters YES in step S103), a predetermined key on the control panel 4 is used to effect the *kana-kanji* conversion in step S104. After completion of the entry of the subscriber's name in Chinese character, a phone number is then entered in step S105.

On the other hand, when no *kana-kanji* conversion is required (NO in step S103), for instance, when a call-receiver's name is entered in alphabet, a phone number is entered without carrying out *kana-kanji* conversion in step S105.

It should be noted that *katakana, hiragana* or *kanji,* or alphabet may not always be a telephone subscriber's name itself, but may be an information by which a call-receiver can be distinguished, for example, a nickname or a symbol.

After completion of the entry of the phone number, an icon characterizing the phone number, namely, indicating the attribute of the phone number, is selected in step S106. ROM 3 stores therein icons characteristic of a home telephone, an office telephone, a mobile telephone, a telephone of a school, a facsimile telephone, and so on, for example. Upon entry of a phone number, a plurality of icons is indicated on the display 6, and one of them is selected in association with the entered phone number.

After selection of the icon, a registered abbreviated phone number is selected for the icon in step S107 by operating keys on the control panel 4. Thus, the abbreviated phone number registration is over.

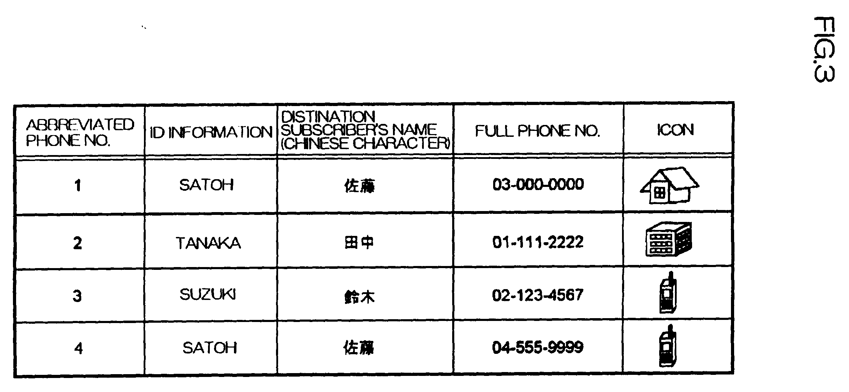

Fig. 3 illustrates a storage pattern having been registered in RAM 7 in the above-mentioned manner. As illustrated in Fig. 3, there are registered in RAM 7, firstly, the name and phone number of Mr. Satoh and an icon indicating that his telephone is a home telephone, secondly, the name and phone number of Mr. Tanaka and an icon indicating that his telephone is an office telephone, thirdly, the name and phone number of Mr. Suzuki and an icon indicating that his telephone is a mobile telephone, and finally the name and phone number of Mr. Satoh and a mobile telephone icon. Abbreviated phone numbers 1 to 4 are assigned to these phone numbers, respectively. Namely, RAM 7 stores therein the same number of information sets as the number of abbreviated phone numbers, each information set including an abbreviated phone number, an ID information, a call-receiver's name, a phone number, and an icon.

In RAM 7, the above-mentioned information on telephone subscribers may be stored in their registered order or in the order of registered abbreviated phone numbers assigned to the respective phone numbers. In any way, a plurality of phone numbers of the same subscriber will not be registered in succession, unless a plurality of phone numbers or abbreviated phone numbers of the same person is designated in succession.

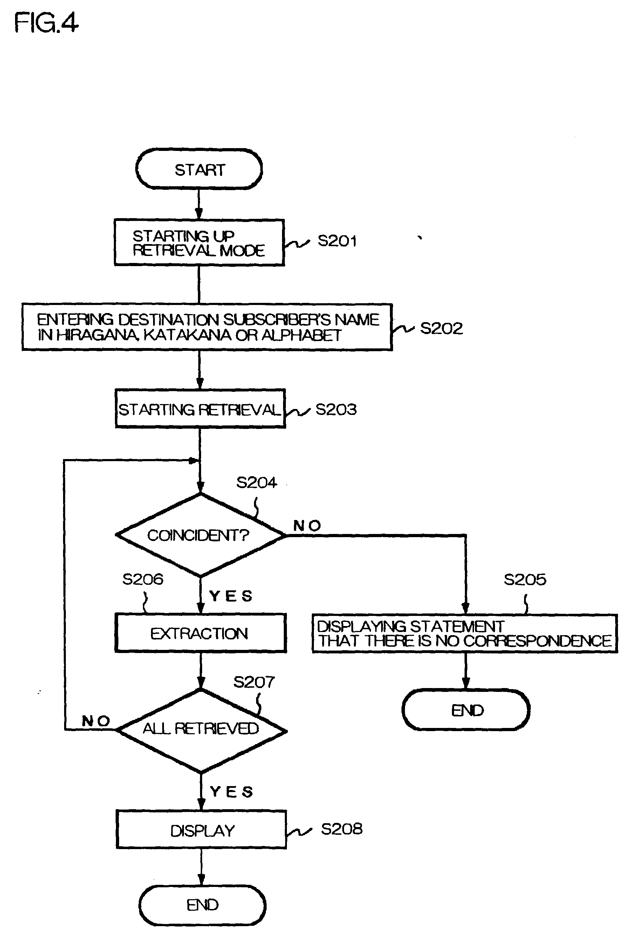

Fig. 4 is a flow chart of an operation to be carried out to display registered information including a registered abbreviated phone number and others.

In Fig. 4, a mode for retrieving an abbreviated phone number is selected by carrying out a predetermined key operation through the use of the control panel 4, in step S 201. A destination subscriber name to be retrieved is entered in *hiragana, katakana* or alphabet through key operation on the control panel 4 in step S202. When a retrieval start command is entered through the control panel 4, the retrieval operation starts in step S203.

This retrieval operation is conducted based on the entered *hiragana, katakana,* or alphabet, that is, based on the destination subscriber ID information. It is judged whether an ID information corresponding to the entered ID information is stored in RAM 7.

It is preferable to in advance establish a standard by which, when there is a correspondence or a predetermined relation between the registered *hiragana, katakana* or alphabet and entered *katakana, hiragana,* or alphabet, they are judged to be coincident with each other. Namely, when *hiragana* corresponding to entered *katakana* is retrieved, for instance, it is judged as to whether they are coincident with each other by the standard having been established in advance.

In the coincidence judgment carried out in step S204, it is judged as to whether the registered *hiragana*, *katakana* or alphabet and entered *katakana, hiragana,* or alphabet are completely coincident with each other, or have a predetermined relation therebetween. This judgment may be effected in the order of registered abbreviated phone numbers, or in the registered order of the phone numbers.

When there is not found any coincidence between the entered and registered data in step S204, the statement of the fact is indicated on the display 6 in step S205.

On the other hand, data which was judged in step S204 to be coincident with the registered one is extracted at step S206. A set of information corresponding to the registered one stored in RAM 7 is temporarily stored in the register 9 installed in the control circuit 2.

For example, when the term "Satoh" is entered as an ID information to identify a subscriber's name to be retrieved, all the abbreviated phone number information stored in RAM 7 are checked for retrieval, and the ID information coincident with the entered ID information, that is, the ID information associated with the abbreviated phone numbers 1 and 4 (see Fig. 3) are sent from RAM 7 to the register 9. The ID information are stored in the register 9.

It should be noted that either all the information included in one information set or the rest except the ID information may be stored in the register 9.

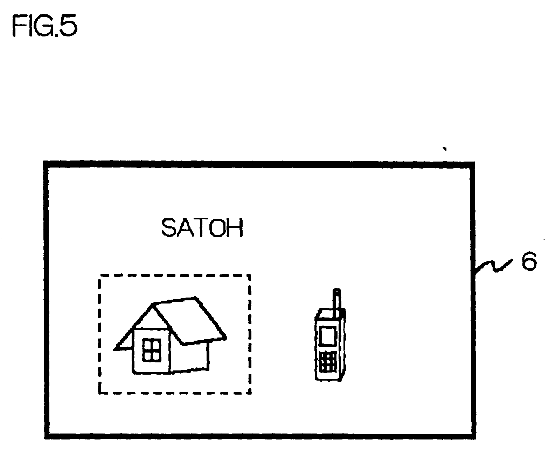

After all registered abbreviated phone number information have been checked for retrieval (YES in step S207), all information judged to be coincident with the entered information are displayed, as illustrated in Fig. 5, in step S208. The control circuit 2 then terminates the retrieval procedure.

Fig. 5 is an example of indication of the registered information on the display 6.

The retrieved ID information "Satoh" is indicated at an upper portion of the display 6, and icons figuring a home telephone and a mobile telephone, registered in association with the ID information, are displayed below the ID information "Satoh".

In Fig. 5, the home telephone icon is enclosed in a dash-line box. The dash-line box can be moved to any one of displayed icons by operating a scroll key on the control panel 4. The display controller may be adapted to display a phone number for the enclosed icon and make a call to the thus displayed phone number. For automatic calling to the displayed phone number, when an off-hook button is actuated while an icon enclosed in a dash-line box is being displayed, the control circuit 2 transmits a signal indicative of the phone number associated with the icon as a dialing data, to the radio transmission/reception circuit 1, which modulates the signal, and transmits the thus modulated signal to a base station.

It should be noted that the ID information is illustrated in Fig. 5, but a name "Satoh" in Chinese character, for example, may be displayed instead of the ID information.

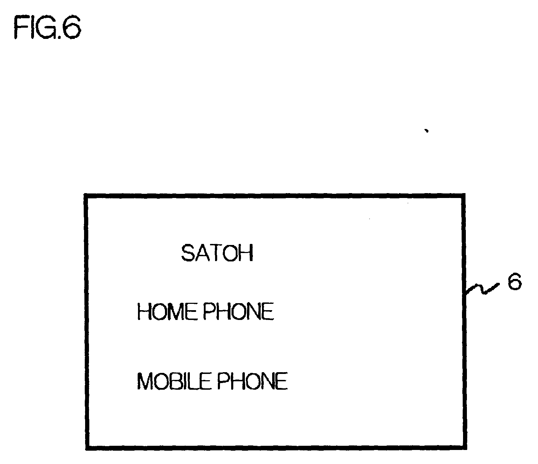

Fig. 6 illustrates another example of indication on the display 6.

The indication in Fig. 6 is different from that in Fig. 5 in that home and mobile phone numbers are displayed in letters in place of their respective icons. These letters can be displayed by carrying out the step S106a in place of the step S106 in Fig. 2. In the step S106a, not icons but letters are designated for an entered phone number. The designated letters are registered in such a manner as illustrated in Fig. 3, in place of icons.

## Claims

1. A display controller, comprising: (a) a memory (7) for storing therein a plurality of information sets, each including a first information for identifying a name of a call-receiver, a phone number of the subscriber, and a second information indicative of an attribute of the phone number, (b) an input device (4) for making input of the first information of a desired call-receiver to be retrieved from the plurality of information sets stored in the memory (7), (c) a controller (2) for extracting an information set including the thus input first information, from the memory (7), and (d) a display (6) for displaying information thereon,
characterized by that the controller (2) causes the display (6) to display the second information, along with the first information, stored in the memory (7) in an information set including the first information.

2. The display as set forth in claim 1, further comprising an information keeper (9) for temporarily keeping therein a certain information set including a first information input through the input device (4) for retrieving the certain information set among the information sets stored in the memory (7), and wherein the second information to be displayed on the display (6) is stored in the information keeper (9).

3. The display controller as set forth in claim 1 or 2, wherein if a plurality of information sets were extracted by the controller (2), the display (6) displays one extracted first information and a plurality of extracted second information.

4. The display controller as set forth in claim 3, wherein the second information is displayed in the form of an icon.

5. The display controller as set forth in claim 1 or 2, wherein the attribute of the phone number indicated as the second information includes a place where a telephone of the call-receiver is installed.

6. The display controller as set forth in claim 1 or 2, wherein the attribute of the phone number indicated as the second information includes indication as to whether a telephone of the call-receiver is a mobile telephone or an installed telephone.

7. A mobile communication terminal comprising a display controller as defined in any one of claims 1 to 6.

8. A method of controlling an operation of a display, comprising the steps of:
(a) storing at least two information steps each including a first information for identifying a name of a call-receiver, a phone number of the call-receiver, and a second information indicative of an attribute of the phone number;
(b) making input of a certain first information for retrieving an information set including the certain first information;
(c) extracting the information set including the certain first information; and
(d) displaying the second information associated with the certain first information, along with the certain first information.

9. The method as set forth in claim 8, further comprising the step of temporarily keeping the information set including the certain first information.

10. The method as set forth in claim 8 or 9, further comprising the step of transmitting a call for a phone number associated with the displayed second information.
